Europäisches Patentamt

European Patent Office

Office européen des brevets

(11) Numéro de publication: **0 422 556 A1**

(12) # DEMANDE DE BREVET EUROPEEN

(21) Numéro de dépôt: **90119253.4**

(51) Int. Cl.5: **H02J 15/00, H01F 7/22**

(22) Date de dépôt: **08.10.90**

La demande, qui etait incomplète au moment du dêpot, est publiée telle quelle (article 93 (2) CBE). Le passage de la description qui comporte manifestement une omission est présenté comme tel.

(30) Priorité: **09.10.89 FR 8913152**

(43) Date de publication de la demande:
**17.04.91 Bulletin 91/16**

(84) Etats contractants désignés:
**AT BE CH DE DK ES FR GB GR IT LI LU NL SE**

(71) Demandeur: **GEC ALSTHOM SA**
**38, avenue Kléber**
**F-75116 Paris(FR)**

(72) Inventeur: **Evrard, Thierry**
**22, Domaine de l'Etang**
**F-90300 Cravanche(FR)**
Inventeur: **Tran, Than Tam**
**1, rue Négrier**
**F-90000 Belfort(FR)**

(74) Mandataire: **Weinmiller, Jürgen et al**
**Lennéstrasse 9 Postfach 24**
**W-8133 Feldafing(DE)**

(54) **Dispositif de stockage d'énergie électromagnétique dans des enroulements supraconducteurs en forme de tore.**

(57) Dispositif de stockage d'énergie électromagnétique dans des enroulements supraconducteurs en forme de tore de section droite circulaire,

Il se compose d'une pluralité de bobinages cylindriques plats (2) de plan de symétrie perpendiculaire à leur axe passant par l'axe du tore, séparés par des éléments intercalaires (4) en forme de biseau.

Application à la régulation de réseaux de distribution ou de machines électriques.

FIG. 1

## DISPOSITIF DE STOCKAGE D'ÉNERGIE ÉLECTROMAGNÉTIQUE DANS DES ENROULEMENTS SUPRACONDUCTEURS EN FORME DE TORE.

La présente invention concerne un dispositif de stockage d'énergie électromagnétique dans des enroulements supraconducteurs en forme de tore de section droite circulaire.

On a déjà proposé de stocker de l'énergie électromagnétique dans des enroulements supraconducteurs pour répondre aux fluctuations de la demande dans des réseaux de distribution ou assurer la régulation de machines électriques. Il a été prévu de disposer ces enroulements en forme de tore de section droite circulaire pour réduire le plus possible les champs magnétiques parasites engendrés autour des enroulements de stockage.

La réalisation d'un bobinage supraconducteur torique est cependant délicate. Il convient de fabriquer préablement un mandrin sur lequel seront enroulées les spires du bobinage, et il est nécessaire de disposer d'une bobineuse spéciale pour cette opération.

La présente invention a pour but de procurer un dispositif de stockage d'énergie électromagnétique de fabrication plus facile, pouvant s'effectuer en série, sans emploi d'une bobineuse spéciale, et moins coûteuse.

Le dispositif selon l'invention est caractérisé en ce qu'il se compose d'une pluralité de bobinages cylindriques plats, de plan de symétrie perpendiculaire à leur axe passant par l'axe de tore, séparés par des éléments intercalaires en forme de biseau.

Il répond en outre de préférence à au moins l'une des caractéristiques suivantes :
- Les bobinages sont emboîtés dans les intercalaires biseautés.
- Le nombre de bobinages est au moins égal à vingt.
- Chaque bobinage est percé de canaux de circulation d'un fluide cryogénique réfrigérant.

Il est décrit ci-après, à titre d'exemple et en référence aux figures du dessin annexé, un dispositif de stockage d'énergie électromagnétique selon l'invention.

La figure 1 représente en plan la moitié d'un dispositif torique avec coupe de certains des bobinages par le plan méridien du tore.

La figure 2 est une coupe de la moitié d'un bobinage par le plan équatorial du tore (selon l'axe II-II de la figure 3).

La figure 3 est une coupe selon l'axe III-III de la figure 2, les conducteurs de bobinage étant supposés enlevés.

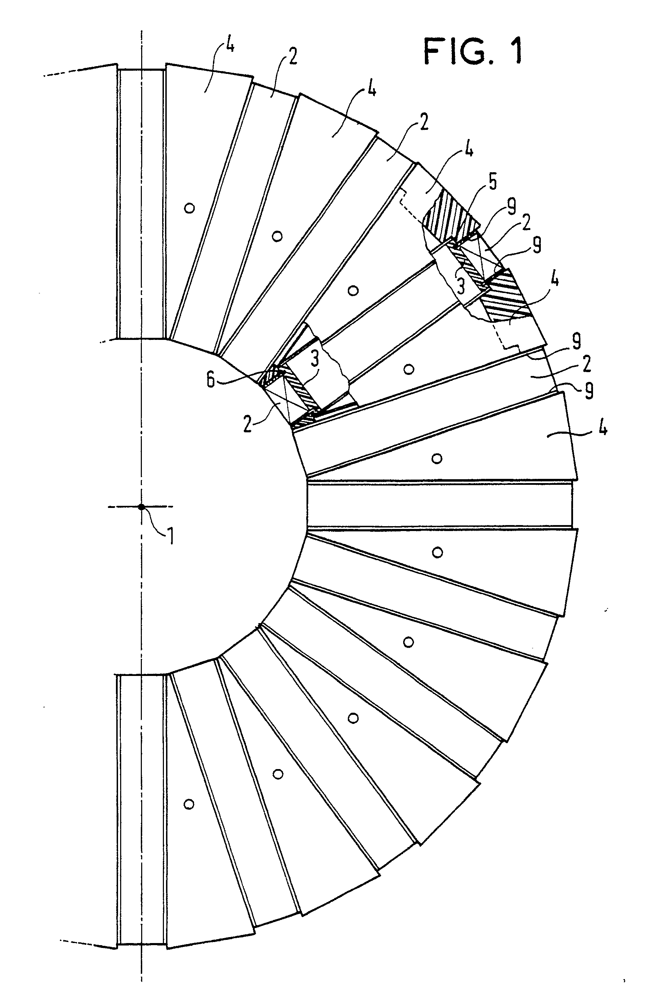

Dans la figure 1, le tore d'axe 1 comprend 20 bobinages répartis sur son pourtour, et dont les plans de symétrie font donc un angle de 18°.

Chaque bobinage proprement dit 2 est enroulé sur un support circulaire 3. Les bobinages sont séparés par des intercalaires en en forme de biseau 4, dans lesquels leurs supports sont emboîtés grâce à des épaulements externes 5 et internes 6 de ces intercalaires. Ces intercalaires peuvent être d'une seule pièce, sauf un intercalaire destiné à assurer la fermeture du tore, qui sera de préférence en deux parties symétriques par rapport à un plan tangent à l'axe circulaire du tore.

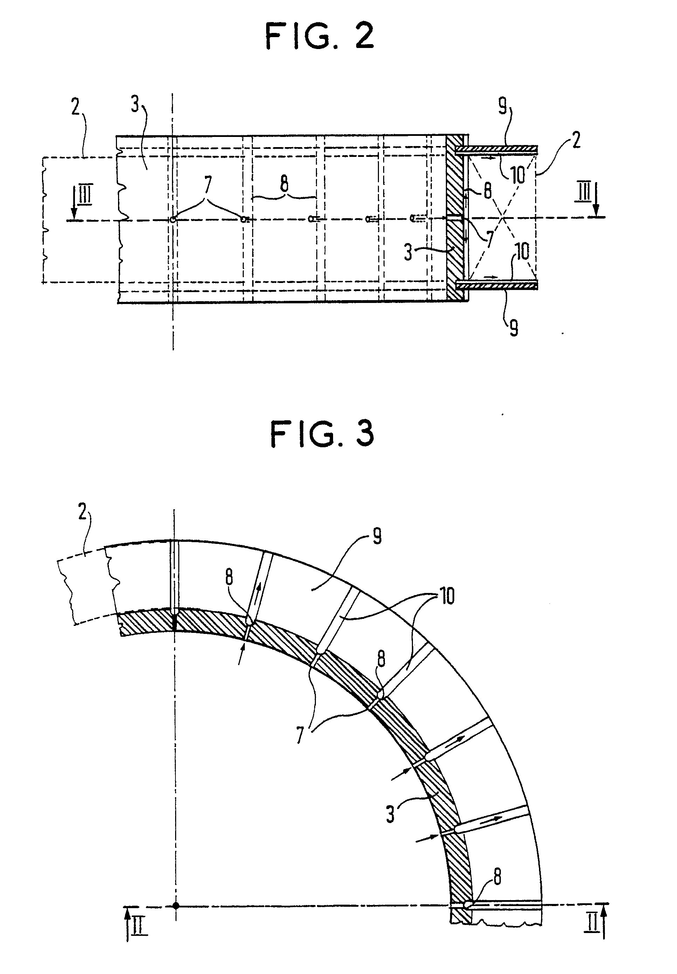

La figure 2 permet de voir des canaux de circulation d'un fluide cryogénique réfrigérant, tel que l'hélium, 7 à travers le support 3 de ce bobinage, puis 8 sous les conducteurs du bobinage, avant son évacuation radiale le long de ses flasques 9.

La coupe de la figure 3 montre un flasque 9 du support du bobinage, entaillé de canaux radiaux 10 permettant l'évacuation du fluide réfrigérant à partir du canal 8 sous les conducteurs du bobinage.

Les conducteurs d'un bobinage sont reliés naturellement aux conducteurs des bobinages adjacents par des conducteurs de liaison, non représentés.

## Revendications

1/ Dispositif de stockage d'énergie électromagnétique dans des enroulements supraconducteurs en forme de tore de section droite circulaire, caractérisé en ce qu'il se compose d'une pluralité de bobinages cylindriques plats (2) de plan de symétrie perpendiculaire à leur axe passant par l'axe du tore, séparés par des éléments intercalaires (4) en forme de biseau.

2/ Dispositif selon la revendication 1, caractérisé en ce que les bobinages sont emboîtés dans les intercalaires biseautés.

3/ Dispositif selon les revendications 1 à 2, caractérisé en ce que le nombre de bobinages cylindriques plats est au moins égal à vingt.

4/ Dispositif selon une des revendications 1 à 3, caractérisé en ce que chaque bobinage est percé de canaux (7, 8, 10) de circulation d'un fluide cryogénique réfrigérant.

# FIG. 1

# FIG. 2

# FIG. 3

4

# RAPPORT DE RECHERCHE EUROPEENNE

Numéro de la demande

**EP 90 11 9253**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 901 696 (HOUSTON AREA RESEARCH CENTER) <br> * abrégé * * page 8, ligne 18 - page 9, ligne 15; figures 1, 2 * <br> — — — | 1-4 | H 02 <br> J 15/00 <br> H 01 F 7/22 |
| A | FR-A-2 618 955 (HITACHI LTD) <br> * abrégé; revendications 1-19; figure 5 * <br> — — — | 1 | |
| A | FR-A-2 114 708 (SIEMENS AG) <br> * page 3, ligne 25 - page 4, ligne 9; revendications 1-7; figures 1, 2 * <br> — — — | 1-4 | |
| A | PATENT ABSTRACTS OF JAPAN vol. 10, no. 1 <br> (E-371)(2058) 07 janvier 1986, <br> & JP-A-60 165774 (TOSHIBA K.K.) 28 août 1985, <br> * le document en entier * <br> — — — | 1-4 | |
| A | PATENT ABSTRACTS OF JAPAN vol. 6, no. 194 <br> (E-134)(1072) 02 octobre 1982, <br> & JP-A-57 106008 (TOKYO SHIBAURA DENKI K.K.) 01 juillet 1982, <br> * le document en entier * <br> — — — — — | 1-4 | |

DOMAINES TECHNIQUES
RECHERCHES (Int. Cl.5)

H 02 J
H 01 F

Le présent rapport de recherche a été établi pour toutes les revendications

| Lieu de la recherche | Date d'achèvement de la recherche | Examinateur |
|---|---|---|
| La Haye | 04 janvier 91 | SCHOBERT D.A.V. |